# EUROPEAN PATENT APPLICATION

(11) **EP 4 825 235 A1**
(43) Date of publication of application: **21.10.2026**
(21) Application number: 23961417.5
(22) Date of filing: 13.12.2023
(51) Int. Cl.: A24F 40/57, G05D 23/00, G05D 23/19

(54) **FLAVOR INHALER OR AEROSOL-GENERATING APPARATUS, METHOD FOR CONTROLLING SAME, AND PROGRAM THEREFOR**

(71) Applicant: Japan Tobacco Inc., Tokyo 105-6927 (JP)
(72) Inventor: MINATO, Junji, Tokyo 130-8603 (JP); YOSHIDA, Ryo, Tokyo 130-8603 (JP); NAKAMURA, Satoshi, Tokyo 130-8603 (JP)
(74) Representative: Hoffmann Eitle
(86) International application number: PCT/JP2023/044561
(87) International publication number: WO 2025/126350

(57) **Abstract**

To provide a flavor inhaler etc. capable of further increasing response speed. Disclosed is a method for controlling a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, the method comprising a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.

## Description

### TECHNICAL FIELD

The present invention relates to a flavor inhaler or an aerosol-generating device (referred to below as a "flavor inhaler etc.").

### BACKGROUND ART

Flavor inhalers, etc. such as heated tobacco, in which a stick-type smoking article is heated, and the flavor which is generated is inhaled, have become common alternatives to cigarettes. Citation 1, for example, discloses a flavor inhaler etc. such as this, in which temperature control of a heating unit of the flavor inhaler etc. is achieved by means of PID (Proportional-Integral-Differential Controller) control.

### CITATION LIST

### PATENT LITERATURE

PTL 1: WO 2023/181279 A1

### SUMMARY OF INVENTION

### PROBLEM TO BE SOLVED BY THE INVENTION

In the temperature control disclosed in Citation 1, it is indicated that PID gains, which are a parameter of PID control, are switched at a predetermined timing during heating in the flavor inhaler etc. The accumulated value of the integral term of the PID gains is also sometimes reset when the gains are switched, because not resetting the accumulated value of the integral term of the gains causes a slower response speed. User satisfaction can be increased by making the response speed even faster.
In light of this problem, the objective of the present invention lies in providing a flavor inhaler etc. capable of further increasing response speed.

### SOLUTION TO PROBLEM

In order to solve the problem above, one aspect of the preset invention is a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, wherein the control unit is configured to control the heating unit while switching PID gains used in the PID control, in accordance with an elapsed time from the start of control based on the control information or with a transition of the temperature at which the aerosol source is heated, and to determine, based on a predefined condition, that an accumulated value of the integral term of the PID gains is not to be reset at a specific switching timing of control with respect to the heating unit.

Furthermore, another aspect of the present invention is the abovementioned device, wherein the predefined condition is: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.

Furthermore, another aspect of the present invention is the abovementioned device, wherein the predefined condition is, during preheating of the flavor source or the aerosol source: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.

Furthermore, another aspect of the present invention is the abovementioned device, wherein the predefined condition is that the value of the I gain is zero before control of the heating unit is switched.

Furthermore, another aspect of the present invention is a method for controlling a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, the method comprising a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.

Furthermore, another aspect of the present invention is a program for causing a processor of a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, to implement a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.

### BRIEF DESCRIPTION OF DRAWINGS

[Fig. 1A] is a schematic diagram schematically showing a configuration example of a flavor inhaler etc. according to an embodiment of the present invention.
[Fig. 1B] is a schematic diagram schematically showing a configuration example of a flavor inhaler etc. according to an embodiment of the present invention.
[Fig. 2] is a diagram showing an example of a heating profile.
[Fig. 3] as a diagram showing details of part of the heating profile.
[Fig. 4] is a diagram showing an example of a heating profile.
[Fig. 5A] is a diagram showing the change in PWM duty ratio in a case where the accumulated value of the integral term of the PID gains is reset when the gains are switched.
[Fig. 5B] is a diagram showing the change in PWM duty ratio in a case where the accumulated value of the integral term of the PID gains is not reset when the gains are switched.
[Fig. 6] is a flowchart showing an example of a processing flow implemented by the flavor inhaler etc. according to an embodiment of the present invention.

### EMBODIMENTS OF THE INVENTION

Embodiments of the present invention will be described in detail below with reference to the drawings.

The flavor inhaler etc. according to this embodiment is a flavor inhaler or an aerosol-generating device which generates a substance to be inhaled by a user. The substance generated by the flavor inhaler etc. may be an aerosol, or a gas which is not an aerosol. Furthermore, the flavor inhaler is an instrument for inhaling a flavor, and may be, but is not limited to, an instrument for electronic cigarettes, heated tobacco, or conventional tobacco, for example. Furthermore, an aerosol-generating device is a device for inhaling a generated aerosol, and may be, but is not limited to, a device such as an electronic cigarette, heated tobacco, or a medical nebulizer, for example. Furthermore, flavor inhalers etc. include what are known as RRPs (reduced-risk products).

### (Configuration of flavor inhaler etc.)

### (First configuration example)

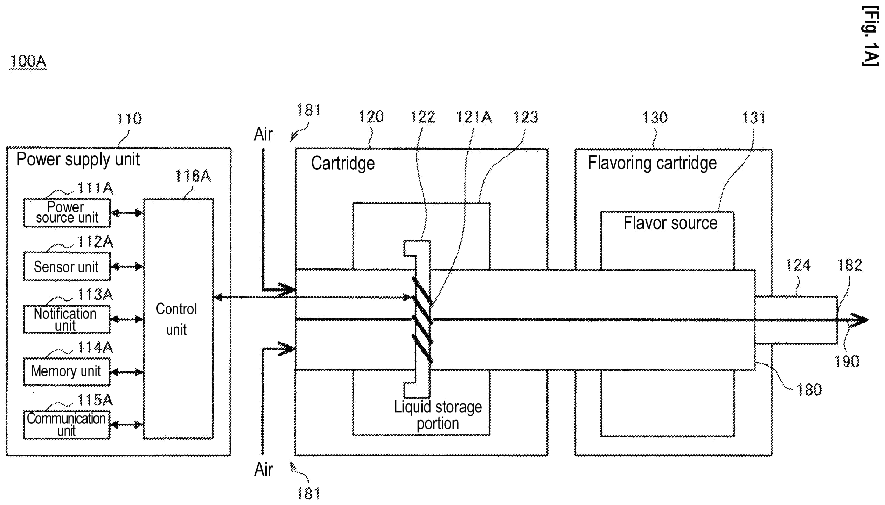

Fig. 1A is a schematic diagram schematically showing a first configuration example of a flavor inhaler etc. As shown in fig. 1A, a flavor inhaler etc. 100A according to this configuration example includes a power supply unit 110, a cartridge 120, and a flavoring cartridge 130, by way of example. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131, and a mouthpiece 124. An air flow path 180 is formed in the cartridge 120 and the flavoring cartridge 130.

It should be noted that the cartridge 120 and the flavoring cartridge 130 are examples of what are known as "refills". One or both of the refills 120 and 130 may be at least partly colored according to the type of refill. Furthermore, coloring by type is not limited to the refills, and this may apply to any component mounted in the flavor inhaler etc. 100A.

The power source unit 111A stores electrical power. The power source unit 111A then supplies the electrical power to each component of the flavor inhaler etc. 100A in accordance with control performed by the control unit 116A. The power source unit 111A may be configured, for example, by a rechargeable battery such as a lithium ion secondary battery.

The sensor unit 112A acquires various types of information relating to the flavor inhaler etc. 100A. The sensor unit 112A may comprise a pressure sensor such as a microphone capacitor, a flow rate sensor or a temperature sensor, etc. Furthermore, the sensor unit 112A may comprise an input device, such as a button or a switch, for accepting input of information from the user.

The notification unit 113A has the function of notifying the user of various types of information relating to the flavor inhaler etc. 100A. The notification unit 113A may include, for example, a display device for displaying messages and images, a light-emitting device such as an LED (light-emitting diode) that emits light, a sound output device or acoustic element that outputs sound, or a vibration device that vibrates, etc.

The memory unit 114A stores various types of information for operation of the flavor inhaler etc. 100A. The memory unit 114A is configured by a non-volatile storage medium such as a flash memory, for example. The memory unit 114A may comprise a volatile memory providing a working area for control afforded by the control unit 116A. Furthermore, the memory unit 114A may store data for controlling a heating profile.

The communication unit 115A may be a communication interface capable of performing communication conforming to any wired or wireless communication standard. Standards such as Wi-Fi (registered trademark) or Bluetooth (registered trademark), etc., for example, may be adopted as the communication standard. Furthermore, the communication unit 115A may comprise a communication interface (including a communication module) conforming to a predetermined LPWA wireless communication standard, or a wireless communication standard having similar restrictions. Sigfox and LoRA-WAN, etc. may be adopted as this communication standard.

The control unit 116A functions as an arithmetic processing device and a control device, and controls overall operation within the flavor inhaler etc. 100A in accordance with various programs. The control unit 116A is realized by a central processing unit (CPU) or an electronic circuit such as a microprocessor, for example. For example, the control unit 116A may perform control for implementing processing for heating of an aerosol source in the heating unit 121A. As an example, the control unit 116A may control the heating processing in accordance with a heating profile indicating the manner in which the aerosol source should be heated.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the flavor inhaler etc. 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 1A, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. By way of example, electricity may be supplied when the sensor unit 112A detects that the user has started inhaling, and that predetermined information has been input, or that the user has operated a button or switch, etc. at any timing, etc. The supply of electricity may then be stopped when the sensor unit 112A detects that the user has finished inhaling and/or that predetermined information has been input.
The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.
A configuration example of the flavor inhaler etc. 100A has been described above. The flavor inhaler etc. 100A is, of course, not limited to the configuration described above, and various configurations, such as those illustrated below by way of example, may be adopted.

As an example, the flavor inhaler etc. 100A need not include the flavoring cartridge 130. In this case, the cartridge 120 is provided with the mouthpiece 124.

As another example, the flavor inhaler etc. 100A may include a plurality of types of aerosol sources. A plurality of types of aerosols generated from the plurality of types of aerosol sources may be mixed within the air flow path 180 to cause a chemical reaction, further generating other types of aerosols.

### (Second configuration example)

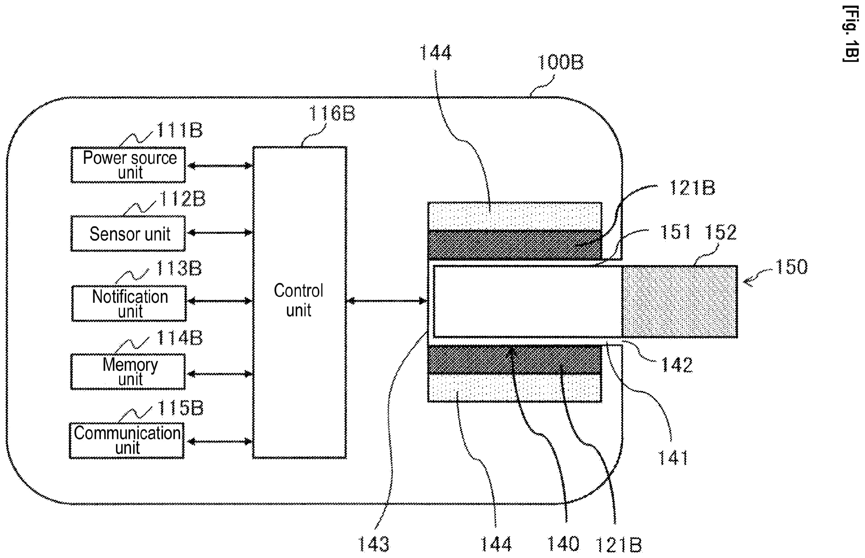

Fig. 1B is a schematic diagram schematically showing a second configuration example of a flavor inhaler etc. As shown in fig. 1B, a flavor inhaler etc. 100B according to this configuration example comprises, by way of example: a power source unit 111B, a sensor unit 112B, a notification unit 113B, a memory unit 114B, a communication unit 115B, a control unit 116B, a heating unit 121B, a holding portion 140, and a heat insulating portion 144.

The power source unit 111B, sensor unit 112B, notification unit 113B, memory unit 114B, communication unit 115B, and control unit 116B are each substantially the same as the corresponding component included in the flavor inhaler etc. 100A of the first configuration example.

The holding portion 140 has an internal space 141, and holds a stick-type substrate 150 while accommodating a portion of the stick-type substrate 150 in the internal space 141. Moreover, the stick-type substrate 150 is also an example of what is known as a "refill". The holding portion 140 has an opening 142 allowing the internal space 141 to communicate with the outside, and holds the stick-type substrate 150 which has been inserted into the internal space 141 from the opening 142. For example, the holding portion 140 is a cylindrical body comprising the opening 142 and a bottom portion 143 serving as a bottom surface, and defines a columnar internal space 141. The holding portion 140 also has a function for defining a flow path for air supplied to the stick-type substrate 150. An air inflow hole which is an inlet for air to the flow path is disposed in the bottom portion 143, for example. Meanwhile, the opening 142 forms an air outflow hole, which is an outlet for air from the flow path.

The stick-type substrate 150 comprises a substrate portion 151 and a mouthpiece portion 152. The substrate portion 151 contains an aerosol source. The aerosol source may be a solid or a liquid, and is atomized by heating to generate an aerosol. The aerosol source may be, for example, a tobacco-derived substance such as cut tobacco, or a processed product obtained by molding a tobacco raw material into a granular form, a sheet form, or a powder form. Furthermore, the aerosol source may also contain a non-tobacco-derived substance produced from a plant other than tobacco (e.g., mint or herb, etc.). As one example, the aerosol source may contain a flavoring component such as menthol. When the flavor inhaler etc. 100 is a medical inhaler, the aerosol source may include a drug to be inhaled by a patient. In a state in which the stick-type substrate 150 is being held in the holding portion 140, at least a portion of the substrate portion 151 is accommodated in the internal space 141, and at least a portion of the mouthpiece portion 152 protrudes from the opening 142. Then, when the user holds the mouthpiece portion 152 protruding from the opening 142 in their mouth and inhales, air flows into the internal space 141 from an air inflow hole (not depicted) and reaches the inside of the user's mouth together with the aerosol generated from the substrate portion 151.

The heating unit 121B has the same configuration as the heating unit 121A according to the first configuration example. However, in the example illustrated in fig. 1B, the heating unit 121B is configured in a film shape and is disposed so as to cover the outer periphery of the holding portion 140. Then, when the heating unit 121B generates heat, the substrate portion 151 of the stick-type substrate 150 is heated from the outer periphery, generating the aerosol. The heat insulating portion 144 prevents heat transfer from the heating unit 121B to other components. For example, the heat insulating portion 144 is configured from a vacuum heat insulating material or an aerogel heat insulating material, or the like.
A configuration example of the flavor inhaler etc. 100B has been described above. The flavor inhaler etc. 100B is, of course, not limited to the configuration described above, and various configurations, such as those illustrated below by way of example, may be adopted.

As one example, the heating unit 121B may have a blade-like form and may be arranged so as to protrude into the internal space 141 from the bottom portion 143 of the holding portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the holding portion 140. Furthermore, the heating unit 121B may be configured by a combination of two or more from among a first heating unit covering the outer circumference of the holding portion 140, a blade-like second heating unit, and a third heating unit covering the bottom portion 143 of the holding portion 140.

As another example, the holding portion 140 may comprise an opening/closing mechanism such as a hinge for opening/closing part of a casing that forms the internal space 141. Then, by opening and closing part of the outer casing, the holding portion 140 may grip the stick-type substrate 150 that has been inserted into the internal space 141. In this case, the heating unit 121B may be provided on the gripping part of the holding portion 140, and may heat the stick-type substrate 150 while pressing same.

Furthermore, the flavor inhaler etc. 100B may additionally include the heating unit 121A, the liquid guiding portion 122, the liquid storage portion 123, and the air flow path 180 according to the first configuration example, and the air outflow hole 182 of the air flow path 180 may also serve as the air inflow hole to the internal space 141. In this case, the mixed fluid of the aerosol generated by the heating unit 121A and air flows into the internal space 141 and is further mixed with the aerosol generated by the heating unit 121B, and reaches the oral cavity of the user.

### (Heating profile)

The control unit 116 controls the operation of the heating unit 121 based on the heating profile. The operation of the heating unit 121 is controlled by controlling electrical supply from the power source unit 111 to the heating unit 121. The heating unit 121 heats the aerosol source contained in the stick-type substrate 150 etc. using power supplied from the power source unit 111.

The heating profile is control information for controlling the temperature at which the aerosol source is heated. The heating profile may be control information for controlling the temperature of the heating unit 121. As an example, the heating profile may include a target value of the temperature of the heating unit 121 (also referred to below as the "target temperature"). The target temperature may vary according to the elapsed time since the start of heating, in which case the heating profile includes information defining a time-series transition of the target temperature. As another example, the heating profile may comprise a parameter (hereinafter also referred to as a power supply parameter) defining how power is supplied to the heating unit 121. The power supply parameters include, for example, a voltage applied to the heating unit 121, ON/OFF of the power supply to the heating unit 121, or a method of feedback control to be employed. ON/OFF of the power supply to the heating unit 121 may be considered as ON/OFF of the heating unit 121.

The control unit 116 controls the operation of the heating unit 121 such that the temperature of the heating unit 121 (also referred to below as the "actual temperature") transitions similarly to the target temperature defined in the heating profile. The flavor tasted by the user may be varied by controlling operation of the heating unit 121 based on the heating profile.

The temperature control of the heating unit 121 can be realized by known feedback control, for example. The feedback control is PID control in this embodiment. In this embodiment, the control unit 116 may cause power from the power source unit 111 to be supplied to the heating unit 121 in the form of pulses by pulse width modulation (PWM). In that case, the control unit 116 can control the temperature of the heating unit 121 by adjusting the duty ratio of the power pulses in the feedback control.

The temperature of the heating unit 121 can be quantified by measuring or estimating the electrical resistance value of the heating unit 121 (a heating resistive element constituting the heating unit 121, to be more precise), for example. This is because the electrical resistance value of the heating resistive element varies with temperature. The electrical resistance value of the heating resistive element can be estimated by measuring the amount of voltage drop at the heating resistive element, for example. The amount of voltage drop at the heating resistive element can be measured by a voltage sensor measuring a potential difference applied to the heating resistive element. In another example, the temperature of the heating unit 121 can be measured by a temperature sensor such as a thermistor installed near the heating unit 121.

The period from the start to the end of the processing to generate an aerosol using the stick-type substrate 150 is also referred to hereinafter as a heating session. In other words, a heating session is a period of time during which electrical supply to the heating unit 121 is controlled on the basis of the heating profile. The beginning of the heating session is the timing at which heating based on the heating profile is started. The end of the heating session is a timing at which a sufficient amount of aerosol is no longer being generated. The heating session comprises a preheating period and a puffing-possible period following the preheating period. Here, the action by which the user inhales the aerosol is referred to as "puffing" or a "puffing action" (the same hereinafter). The puffing-possible period is the period of time during which a sufficient amount of aerosol is expected to be generated. The preheating period is the period from when heating is started until the puffing-possible period is started. Heating performed in the preheating period is also referred to as preheating.
An example of a heating profile according to this embodiment is given in Table 1 below.

**[Table 1]**

| Table 1. Example of heating profile | | | | |
|---|---|---|---|---|
| Period | | Time-series transition of target temperature | Time-series of electrical supply parameter | |
| Section | Duration | | Voltage | ON/OFF |
| STEP 0 | - | Increase to 300°C (no time control) | High | ON |
| STEP 1 | 20 sec | Maintain 300°C | High | ON |
| STEP 2 | 20 sec | Maintain 300°C | High | ON |
| STEP 3 | 20 sec | Reduce to 220°C | Switch to low | OFF |
| STEP 4 | 20 sec | Increase to 270°C | Low | ON |
| STEP 5 | 20 sec | | Low | ON |
| STEP 6 | 20 sec | | Low | ON |
| STEP 7 | 20 sec | | Low | ON |
| STEP 8 | 40 sec | Maintain 270°C | Low | ON |
| STEP 9 | 20 sec | - | Switch to high | OFF |

As shown in Table 1, the heating profile may be divided into a plurality of periods, each period defining a time series transition of the target temperature and a time series transition of the power supply parameters. In the example shown in Table 1, the heating profile is divided into a total of 10 periods, namely STEP 0-STEP 9. In each STEP, the time series transition of the target temperature and the time series transition of the power supply parameters are defined.

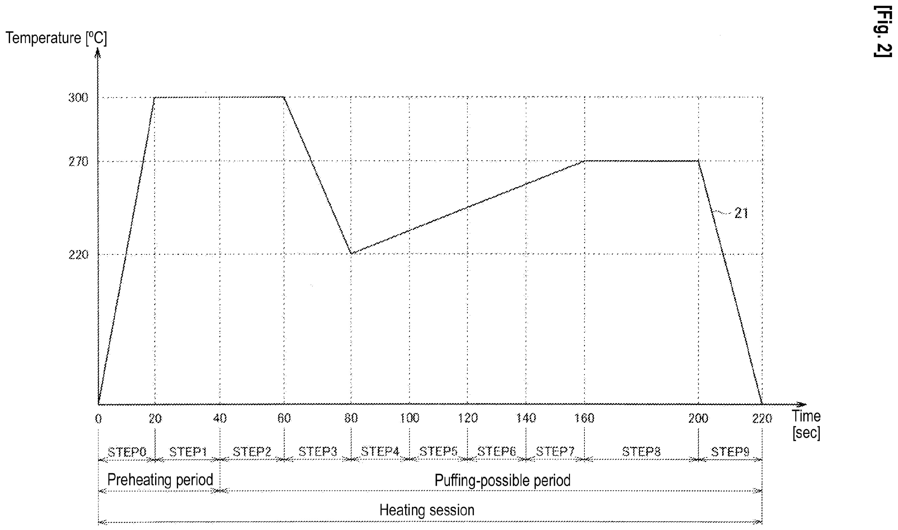

The transition of the temperature of the heating unit 121 when the control unit 116 performs temperature control in accordance with the heating profile shown in Table 1 will be described with reference to fig. 2. Fig. 2 is a graph illustrating an example of the transition of the temperature of the heating unit 121 when temperature control is performed on the basis of the heating profile shown in Table 1. The horizontal axis of this graph denotes time (seconds). The vertical axis of this graph denotes the temperature of the heating unit 121. The line 21 in this graph shows the transition of the temperature of the heating unit 121. As shown in fig. 2, the temperature of the heating unit 121 transitions in the same way as the transition of the target temperature defined in the heating profile. An example of a heating profile will be described below with reference to Table 1 and fig. 2.

As shown in Table 1 and fig. 2, in STEP 0, the temperature of the heating unit 121 is increased from an initial temperature to 300°C. The initial temperature is the temperature of the heating unit 121 at the start of heating. In this example, temperature control is not performed in STEP 0. Here, time control is control to also establish an elapsed time until a target value in the heating profile (a target temperature here) is reached. That is to say, a target value is set for the heating profile in STEP 0, but there is no need to set a target for the elapsed time until this target value is reached. When time control is performed, the end of the STEP is triggered by this duration passing. Time control is not performed in STEP 0 in this example, so the end of STEP 0 is triggered by the temperature of the heating unit 121 reaching 300°C. STEP 0 terminates at 20 seconds in the example in fig. 2. After this, the temperature of the heating unit 121 is maintained at 300°C in STEP 1 and STEP 2. The preheating period ends with the end of STEP 1, and the puffing-possible period starts together with STEP 2 starting. It should be noted that time control not being performed in STEP 0 does not preclude control such as stopping heating after determining an error when a predetermined temperature is not reached within a predetermined time, for example.

A shorter preheating time is desirable for the user. However, if the stick-type substrate 150 in fig. 1B is not sufficiently heated, for example, then moisture may not fully evaporate and may remain inside the stick-type substrate 150. If the user then takes a puff, hot water vapor may be delivered to the user's mouth. It is therefore desirable to increase the temperature of the heating unit 121 rapidly in STEP 0 until it reaches 300°C, and to ensure a certain duration for STEP 1.

Here, the heating unit 121 is supplied with electricity at a high voltage in STEP 0-STEP 2 of this example. The temperature of the heating unit 121 is therefore made to reach 300°C rapidly, after which this high temperature can also be maintained. Furthermore, the preheating period can be shortened.

As shown in Table 1 and fig. 2, the temperature of the heating unit 121 decreases to 220°C in STEP 3. The electrical supply to the heating unit 121 is turned OFF in STEP 3. The temperature of the heating unit 121 can therefore be rapidly reduced. Meanwhile, the voltage applied to the heating unit 121 is switched from a high voltage to a low voltage. When the voltage is switched in a period during which there is electrical supply to the heating unit 121, there may be a drop in the precision of temperature control for reasons such as noise being added to PID control gains. In this regard, a drop in the precision of temperature control associated with voltage switching can be prevented by switching the voltage in a period during which there is no electrical supply to the heating unit 121.

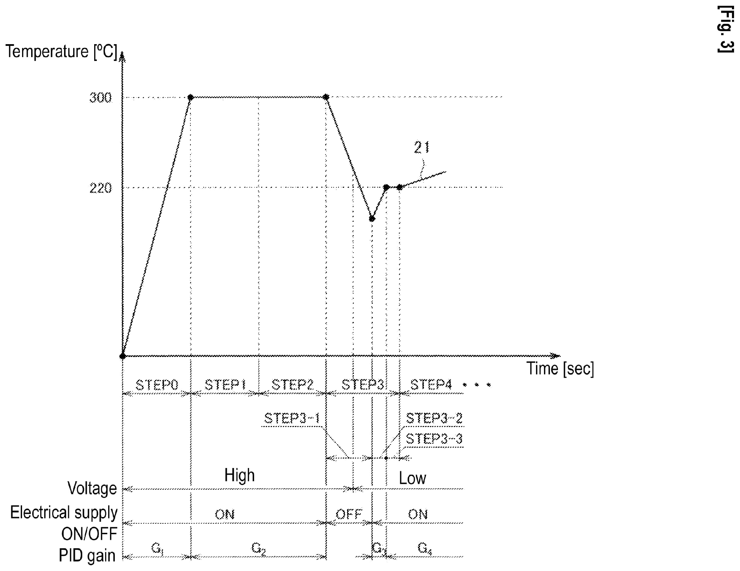

Here, the control in STEP 3 will be described in further detail with reference to fig. 3. Fig. 3 is a graph showing a detailed example of a transition of the temperature of the heating unit 121 shown in fig. 2. STEP 0-STEP 4, which are the first half of the temperature transition of the heating unit 121 shown in fig. 2, are illustrated in detail in fig. 3.

As shown in fig. 3, STEP 3 of this example can be divided into three periods: STEP 3-1, STEP 3-2, and STEP 3-3. When the duration of STEP 2 has elapsed, the control unit 116 interrupts electrical supply from the power source unit 111 to the heating unit 121 in STEP 3-1, which is the initial stage of STEP 3. The temperature of the heating unit 121 decreases as a result. However, if there is an excessive reduction in the temperature of the heating unit 121, there may be a deterioration in the smoking taste delivered to the user. If the temperature of the heating unit 121 falls below 220°C in STEP 3-2, which is the intermediate stage of STEP 3, then electrical supply to the heating unit 121 is resumed, and heating is resumed. The temperature of the heating unit 121 is preferably increased rapidly until it reaches 220°C in STEP 3-2 in order to prevent a deterioration in smoking taste. Time control is not performed in STEP 3-1 or STEP 3-2. Meanwhile, time control is performed in STEP 3 as a whole. The control unit 116 therefore maintains the temperature of the heating unit 121 at 220°C in STEP 3-3, which is the period until the duration of STEP 3 ends. Of course, time control need not be performed in STEP 3 as a whole. In that case, STEP 3-3 is omitted.

As shown in Table 1 and fig. 2, the temperature of the heating unit 121 is then slowly increased to 270°C over the course of STEP 4-STEP 7. Control information covering multiple STEPs may be defined in this way. After this, the temperature of the heating unit 121 is maintained at 270°C in STEP 8.

Here, electricity is supplied to the heating unit 121 at a low voltage in STEP 4-STEP 8 of this example. In STEP 4-STEP 8, there is no need for the temperature of the heating unit 121 to be rapidly increased, and no need for a high temperature to be maintained. Power consumption in the heating session as a whole can be limited by reducing the voltage in STEP 4-STEP 8.

As shown in Table 1 and fig. 2, the temperature of the heating unit 121 decreases in STEP 9. The electrical supply to the heating unit 121 is turned OFF in STEP 9. Meanwhile, the voltage applied to the heating unit 121 is switched from a low voltage to a high voltage. This enables the subsequent heating session to be started at a high voltage. Furthermore, a drop in the precision of temperature control associated with voltage switching can be prevented by switching the voltage in a period during which there is no electrical supply to the heating unit 121. In step 9 of this example, the duration is defined, but the target temperature is not defined. The end of STEP 9 is therefore triggered by the end of the duration. In STEP 9, a sufficient amount of aerosol can be generated by residual heat of the stick-type substrate 150. In this example, the puffing-possible period, which is to say the heating session, therefore ends with the end of STEP 9.

The user may be notified of the start and end timings of the puffing-possible period. For example, the user may be notified when STEP 2 starts and when STEP 9 ends. The user can take puffs during the puffing-possible period by referring to this notification.

It should be noted that the heating profile described above is only an example, and various other examples are conceivable. By way of example, the number of STEPs, the duration of each STEP, and the target temperature may be suitably varied. As another example, time control may be performed in STEP 0. For example, in STEP 0, the temperature of the heating unit 121 may be increased from the initial temperature to 300°C, and then maintained at 300°C until the end of the duration. Alternatively, in STEP 0, the temperature-increase speed may be controlled so that the temperature of the heating unit 121 reaches 300°C at the end of the duration. As another example, the temperature of the heating unit 121 may be maintained at 220°C in STEP 4.

### (PID gain control)

In this embodiment, the control unit 116 controls the electrical supply from the power source unit 111 to the heating unit 121 by means of PID control based on the heating profile. PID control is a method of controlling input values to a controlled system using three elements, namely the error between an output value from the controlled system and a target value, an integral of this error, and a derivative of this error. In this embodiment, the controlled system is the heating unit 121, the output value from the heating unit 121 is the actual temperature, the target value is the target temperature, and the input value is a parameter defining the amount of electricity supplied to the heating unit 121 (e.g., the duty ratio in PWM control).

At least three parameters (P gain, I gain, and D gain) are involved in PID control. These PID control parameters will also be referred to collectively below as PID gains. The P gain is a coefficient multiplied by the error. The I gain is a coefficient multiplied by the integral value of the error. The D gain is a coefficient multiplied by the derivative value of the error. For example, the control unit 116 calculates the duty ratio at a given time by summing: a value obtained by multiplying the P gain by the error between the actual temperature and the target temperature at that time; a value obtained by multiplying the I gain by the integral value of the error; and a value obtained by multiplying the D gain by the derivative value of the error. It should be noted that one or two of the P gain, I gain, and D gain may be set at 0.

Typically, increasing the P gain makes it possible to shorten the time until the actual temperature reaches the target temperature. However, if the P gain is excessively large, this makes overshoot and undershoot more likely to occur. That is to say, if the P gain is excessively large, the amplitude of hunting, where the temperature oscillates above and below the target temperature, will increase. Conversely, a smaller P gain increases the steady-state error.

Typically, increasing the D gain can make overshoot and undershoot less likely to occur. That is to say, the amplitude of hunting can be reduced by increasing the D gain.

Typically, increasing the I gain makes it possible to suppress the steady-state error. On the other hand, if the I gain is excessively large, this makes overshoot and undershoot more likely to occur, and the amplitude of hunting increases.
PID control according to this embodiment will be described in detail below with reference to fig. 3 once again.

The heating profile includes two or more different PID gains defined correspondingly with the elapsed time from the start of control based on the heating profile, or with the transition of the temperature of the heating unit 121. The control unit 116 then controls the electrical supply from the power source unit 111 to the heating unit 121 while switching the PID gains in accordance with the elapsed time from the start of control based on the heating profile or with the transition of the temperature of the heating unit 121. In the example shown in fig. 3, the control unit 116 uses PID gains G₁ in STEP 0, uses PID gains G₂ in STEP 1 and STEP 2, uses PID gains G₃ in STEP 3-2, and uses PID gains G₄ in STEP 3-3 and STEP 4. These PID gains are defined in the heating profile together with information defining a switching timing. For example, the start or end of each STEP, or the temperature of the heating unit 121 having reached a predetermined temperature is the trigger for the control unit 116 to switch the PID gains being used. Specifically, the start of STEP 0 is the trigger for the control unit 116 to start using the PID gains G₁. Next, the temperature of the heating unit 121 reaching 300°C is the trigger for the control unit 116 to start using the PID gains G₂. Next, the start of STEP 3-2 is the trigger for the control unit 116 to switch to the PID gains G₃. The temperature of the heating unit 121 reaching 220°C is the trigger for the control unit 116 to then switch to the PID gains G₄. The heating session includes periods in which the temperature transitions in different forms, such as periods in which the temperature is rapidly increased, periods in which the temperature is slowly increased, periods in which the temperature is reduced, and periods in which the temperature is maintained, etc. In this regard, the configuration above enables operation of the heating unit 121 to be controlled by using PID gains better suited to the form of temperature transition. This enables the actual temperature to track the target temperature set in the heating profile more accurately. As a result, a suitable smoking taste can be delivered to the user over the course of the whole heating session.

The PID gains G₁ are PID gains for causing the temperature of the heating unit 121 to rapidly reach a predetermined temperature (i.e., 300°C). Meanwhile, the PID gains G₂ are PID gains for maintaining the temperature of the heating unit 121 at the predetermined temperature. The P gain included in the PID gains G₁ is preferably greater than the P gain included in the PID gains G₂. By virtue of this configuration, the control unit 116 can establish a larger duty ratio in STEP 0, in which the PID gains G₁ are used, than in STEP 1, in which the PID gains G₂ are used. That is to say, the temperature of the heating unit 121 can be made to rapidly reach the predetermined temperature in STEP 0. Furthermore, the I gain included in the PID gains G₂ is preferably greater than the I gain included in the PID gains G₁. By virtue of this configuration, the I gain is increased so that the steady-state error can be effectively reduced in STEP 1, in which the PID gains G₂ are used and there is a smaller temperature change than in STEP 0 in which the PID gains G₁ are used, and the temperature of the heating unit 121 can be suitably maintained at the predetermined temperature.

The same can also be said of the PID gains G₃ and the PID gains G₄. The PID gains G₃ are PID gains for causing the temperature of the heating unit 121 to rapidly reach a predetermined temperature (i.e., 220°C). Meanwhile, the PID gains G₄ are PID gains for maintaining the temperature of the heating unit 121 at the predetermined temperature. The P gain included in the PID gains G₃ is preferably greater than the P gain included in the PID gains G₄. By virtue of this configuration, the control unit 116 can establish a larger duty ratio in STEP 3-2, in which the PID gains G₃ are used, than in STEP 3-3, in which the PID gains G₄ are used. That is to say, the temperature of the heating unit 121 can be made to rapidly reach the predetermined temperature in STEP 3-2. Furthermore, the I gain included in the PID gains G₄ is preferably greater than the I gain included in the PID gains G₃. By virtue of this configuration, the I gain is increased so that the steady-state error can be effectively reduced in STEP 3-3, in which the PID gains G₄ are used and there is a smaller temperature change than in STEP 3-2 in which the PID gains G₃ are used, and the temperature of the heating unit 121 can be suitably maintained at the predetermined temperature.

In this embodiment, the voltage is higher in the period in which the PID gains G₁ are used then in the period in which the PID gains G₃ are used. The amplitude of hunting produced by a large P gain and I gain is greater with a high voltage than with a low voltage. The P gain and/or I gain in the PID gains G₁ is therefore preferably smaller than the P gain and/or I gain in the PID gains G₃. This makes it possible to suppress variations in the error between the actual temperature and the target temperature in the period in which the PID gains G₁ are used.

The same can also be said of the PID gains G₂ and the PID gains G₄. In this embodiment, the voltage is higher in the period in which the PID gains G₂ are used then in the period in which the PID gains G₄ are used. The amplitude of hunting produced by a large P gain and I gain is greater with a high voltage than with a low voltage. The P gain and/or I gain in the PID gains G₂ is therefore preferably smaller than the P gain and/or I gain in the PID gains G₄. This makes it possible to suppress variations in the error between the actual temperature and the target temperature in the period in which the PID gains G₂ are used.

In this embodiment, the accumulated value of the integral term of the gains is also reset (i.e., set at zero) at the start of heating and at a predetermined timing. This makes it possible to avoid a slower response speed. Meanwhile, when the accumulated value of the integral term of the gains is reset, the duty ratio becomes zero and the temperature of the heating unit 121 decreases so that time is needed to increase the temperature, and therefore the accumulated value of the integral term of the gains is not reset under specific conditions.
Here, the "predetermined timing" in this embodiment is switching of the following steps (STEPs).
- Times of switching from temperature-increase control (control to increase the temperature of the heating unit) to temperature-reduction control (control to reduce the temperature of the heating unit).
- Times of switching from constant-value control (control to keep the temperature of the heating unit constant) to temperature-reduction control.
- Times of switching from temperature-reduction control to temperature-increase control.
- Times of switching from temperature-reduction control to constant-value control.

For example, the time of the transition from STEP 2 to STEP 3 and the time of the transition from STEP 8 to STEP 9 in fig. 2 correspond to times of switching from constant-value control to temperature-reduction control. Furthermore, the time of the transition from STEP 3-1 to STEP 3-2 in fig. 3 corresponds to a time of switching from temperature-reduction control to temperature-increase control.
Meanwhile, the accumulated value of the integral term of the gains is not reset at the following timings.
- Times of switching from constant-value control to temperature-increase control.
- Times of switching from temperature-increase control to constant-value control.
- Times of transitioning from constant-value control to constant-value control.

For example, the time of switching from STEP 3-3 to STEP 4 in fig. 3 corresponds to a time of switching from constant-value control to temperature-increase control. Furthermore, the time of switching from STEP 3-2 to STEP 3-3 in fig. 3 corresponds a time of switching from temperature-increase control to constant-value control. Furthermore, the time of the transition from STEP 1 to STEP 2 in fig. 2 corresponds to a time of switching from constant-value control to constant-value control.

The accumulated value of the integral term of the gains is thus not reset when, for instance, temperature-reduction control is not relevant and the temperature of the heating unit 121 is to be kept at a certain level, thereby making it possible to avoid a drop in the temperature of the heating unit 121. Ensuring that there is no drop in the temperature of the heating unit 121 by not resetting the accumulated value of the integral term of the gains is also especially useful in the preheating period from the perspective of keeping the user waiting for as short a time as possible.

### (Specific example)

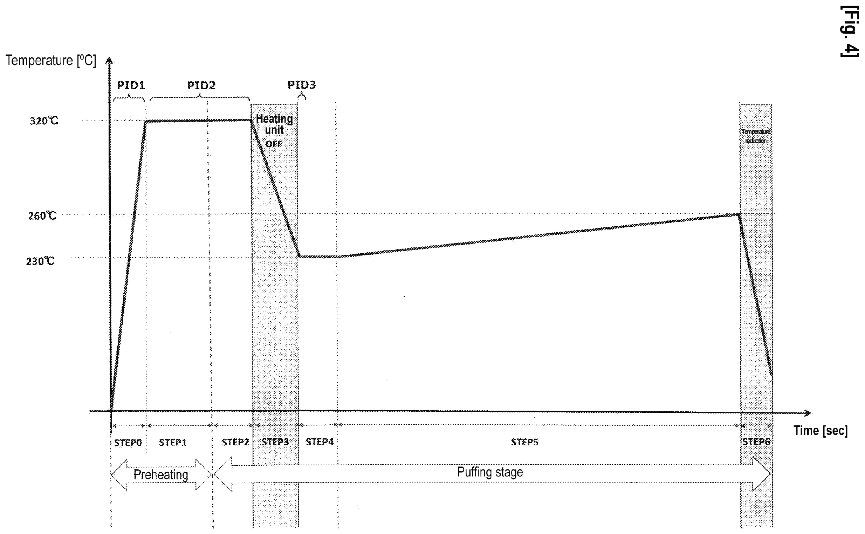

PID gain control according to this embodiment will be further described below. Fig. 4 shows another specific example of a heating profile. The PID gain control in the preheating period in particular will be described below.

In this example also, the PID gains are switched from PID1 to PID2 at the time of the transition from STEP 0 to STEP 1 in the heating profile, similarly to the example in fig. 3. However, the switch from PID1 to PID2 constitutes a switch from temperature-increase control to constant-value control, so the accumulated value of the integral term of the gains is not reset in the PID gain control of this embodiment. Furthermore, in this example, it will be assumed that the PID gains (PID1; Kp1 (P gain)/Ki1 (I gain)/Kd1 (D gain)) in STEP 0, the PID gains (PID2; Kp2 (P gain)/Ki2 (I gain)/Kd2 (D gain)) in STEP 1, and the PID gains (PID3; Kp3 (P gain)/Ki3 (I gain)/Kd3 (D gain)) when heating is resumed immediately after an OFF period of the heating unit, are set as follows.

### (PID1)

Kp1: 10,000,000 (T.B.C.)
Ki1: 6000 (T.B.C.)
Kd1: 0 (T.B.C.)
(PID2)
Kp2: 5000 (T.B.C.)
Ki2: 3000 (T.B.C.)
Kd2: 0 (T.B.C.)
(PID3)
Kp3: 10,000,000 (T.B.C.)
Ki3: 6000 (T.B.C.)
Kd3: 0 (T.B.C.)

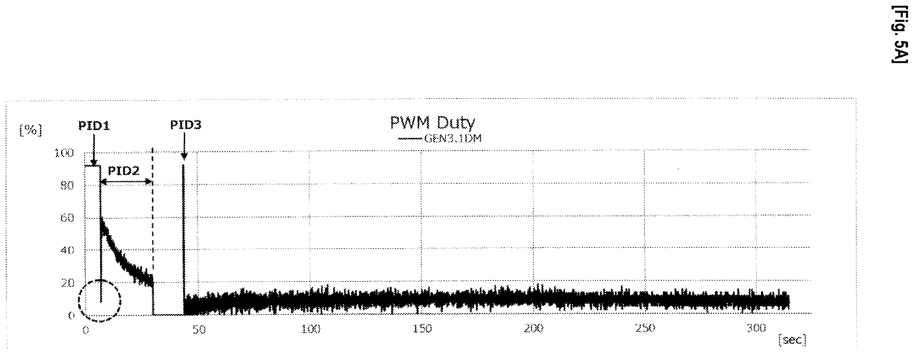

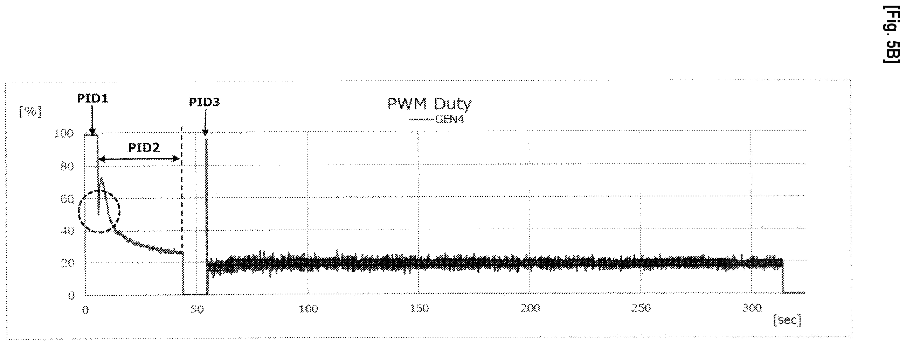

Based on the settings above, fig. 5A and 5B show the difference in the drop in PWM duty ratio when the accumulated value of the integral term of the gains is reset at the time of switching from PID1 to PID2 (from STEP 0 to STEP 1), and when the accumulated value of the integral term of the gains is not reset. Fig. 5A is a diagram showing the change in PWM duty ratio in a case where the accumulated value of the integral term of the PID gains is reset at the time of switching from PID1 to PID2. Fig. 5B is a diagram showing the change in PWM duty ratio in a case where the accumulated value of the integral term of the PID gains is not reset at the time of switching from PID1 to PID2. The vertical axis in fig. 5A and 5B denotes duty ratio (%), and the horizontal axis denotes time (seconds). It should be noted that in this example, it will be assumed that the upper limit value for output of the integral term of the gains in PID1 is 100%, and the accumulated value of the integral term has reached the upper limit value at the time of switching to PID2.

In fig. 5A, the accumulated value of the integral term of the gains is reset, i.e., the integral term becomes zero, when PID1 switches to PID2, and the duty ratio therefore falls to 16% (see the region enclosed by the broken line). This means a large drop in the temperature of the heating unit 121. In fig. 5B, on the other hand, when PID1 switches to PID2, the duty ratio becomes (= 100%)/Ki1 (= 6000) × Ki2 (= 3000) = 50%, expressed as a proportion of the upper limit value of the accumulated value of the integral term, and the drop in duty ratio (see the region enclosed by the broken line) is smaller than in fig. 5A. That is to say, fig. 5B clearly shows a smaller drop in the temperature of the heating unit 121.

Furthermore, when the value of the I gain is zero in a given step at the time of switching steps, the accumulated value of the integral term of the gains may be set at zero. As a result, when the value of the I gain in the step before the switch is zero, the output of the integral term of the PID gains immediately after switching steps is 0%, so the the same effect is achieved as when the accumulated value of the integral term of the gains is reset. For example, when Ki1=0 and Ki2=3000, using the formula: accumulated value of the integral term of the gains in STEP 0 (=0) × Ki2 (=3000), the output of the integral term of the gains PID2 immediately after switching to STEP 1 is 0%.

### (Flowchart)

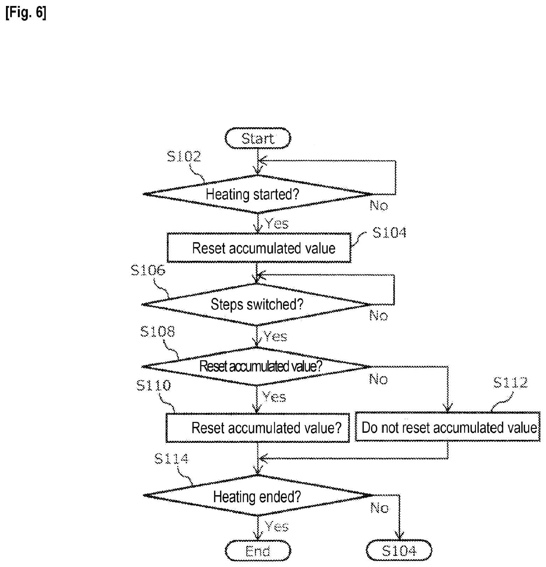

Fig. 6 is a flowchart of a gain control method implemented by the flavor inhaler etc. 100A according to this embodiment.

The control unit 116 first of all determines whether heating by the heating unit 121 has started (step S102). More specifically, the control unit 116 determines whether or not a user operation to instruct the start of heating has been detected, for example. An example of a user operation to instruct the start of heating is an operation on the flavor inhaler etc. 100A, such as operating a switch or the like provided on the flavor inhaler etc. 100A. Another example of a user operation to instruct the start of heating is inserting the stick-type substrate 150 into the flavor inhaler etc. 100A.

If the control unit 116 determines that heating has not been started (step S102: No), the control unit 116 stands by until it is determined, for instance by detecting a user operation to instruct the start of heating, that heating has been started.

If the control unit 116 has determined that heating has started (step S102: Yes), the control unit 116 resets the accumulated value of the integral term of the gains (STEP S104).

The control unit 116 determines whether steps have switched (step S106). For example, the control unit 116 is capable of determining whether or not steps have switched by determining whether the temperature of the heating unit 121 has reached the target temperature, or whether a predetermined time has elapsed in the time control. The control unit 116 stands by until steps are switched (step S106: No).

If the control unit 116 has determined that steps have been switched (step S106: Yes), the control unit 116 determines whether to reset the accumulated value of the integral term of the gains (step S108). In the embodiment, the accumulated value of the integral term of the gains is reset at times of switching from temperature-increase control to temperature-reduction control, times of switching from constant-value control to temperature-reduction control, times of switching from temperature-reduction control to temperature-increase control, or times of switching from temperature-reduction control to constant-value control. Furthermore, in this embodiment, the accumulated value of the integral term of the gains is not reset at times of switching from constant-value control to temperature-increase control, times of switching from temperature-increase control to constant-value control, or times of transitioning from constant-value control to constant-value control.

If the control unit 116 determines that the accumulated value of the integral term of the gains is to be reset (step S108: Yes), the control unit 116 resets the accumulated value of the integral term of the gains (step S110). If the control unit 116 determines that the accumulated value of the integral term of the gains is not to be reset (step S108: No), the control unit 116 controls the accumulated value of the integral term of the gains using the upper limit value, without a reset (step S112).
Steps S104-S112 are repeated until the heating processing terminates (step S114).

An embodiment of the present invention has been described thus far, but the present invention is not limited to the abovementioned embodiment, and it goes without saying that the present invention may be implemented in various different forms within the scope of the technical concept thereof.

Furthermore, the scope of the present invention is not limited to the illustrative embodiment depicted and described, and also includes all embodiments demonstrating equivalent effects to those intended by the present invention. In addition, the scope of the present invention is not limited to the combination of inventive features defined in the claims, and may be defined by any desired combination of specific features among all of the features disclosed.

It should be noted that the following configurations also fall within the technical scope of the present invention.
(1) A device, which is a flavor inhaler or an aerosol-generating device, comprising:
   a power source unit;
   a heating unit for heating a flavor source or an aerosol source; and
   a control unit for controlling electrical supply from the power source unit to the heating unit by means of PID control based on control information for controlling the temperature of the heating unit,
   wherein
   the control unit is configured to control the heating unit while switching PID gains used in the PID control, in accordance with an elapsed time from the start of control based on the control information or with a transition of the temperature at which the aerosol source is heated, and to determine, based on a predefined condition, that an accumulated value of the integral term of the PID gains is not to be reset at a specific switching timing of control with respect to the heating unit.
(2) The device as disclosed in (1) above, wherein the predefined condition is: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.
(3) The device as disclosed in (1) above, wherein the predefined condition is, during preheating of the flavor source or the aerosol source: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.
(4) The device as disclosed in (1) above, wherein the predefined condition is that the value of the I gain is zero before control of the heating unit is switched.
(5) A method for controlling a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit,
   the method comprising a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.
(6) A program for causing a processor of a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, to implement
   a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.

### REFERENCE SIGNS LIST

21... Graph line
100A, 100B... Flavor inhaler etc.
110... Power supply unit
111A, 111B... Power source unit
112A, 112B... Sensor unit
113A, 113B... Notification unit
114A, 114B... Memory unit
115A, 115B... Communication unit
116A, 116B... Control unit
117A, 117B... Converting unit
120... Cartridge
121A, 121B... Heating unit
122... Liquid guiding portion
123... Liquid storage portion
124... Mouthpiece
130... Flavoring cartridge
131... Flavor source
140... Holding portion
141... Internal space
142... Opening
143... Bottom portion
144... Heat insulating portion
150... Stick-type substrate
151... Substrate portion
152... Mouthpiece portion
180... Air flow path
181... Air inflow hole
182... Air outflow hole

## Claims

1. A device, which is a flavor inhaler or an aerosol-generating device, comprising:
a power source unit;
a heating unit for heating a flavor source or an aerosol source; and
a control unit for controlling electrical supply from the power source unit to the heating unit by means of PID control based on control information for controlling the temperature of the heating unit,
wherein
the control unit is configured to control the heating unit while switching PID gains used in the PID control, in accordance with an elapsed time from the start of control based on the control information or with a transition of the temperature at which the aerosol source is heated, and to determine, based on a predefined condition, that an accumulated value of the integral term of the PID gains is not to be reset at a specific switching timing of control with respect to the heating unit.

2. The device as claimed in claim 1, wherein the predefined condition is: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.

3. The device as claimed in claim 1, wherein the predefined condition is, during preheating of the flavor source or the aerosol source: a time of switching from constant-value control, which is control to keep the temperature constant, to temperature-increase control, which is control to increase the temperature of the heating unit; a time of switching from the temperature-increase control to the constant-value control; or a time of switching from the constant-value control to the constant-value control.

4. The device as claimed in claim 1, wherein the predefined condition is that the value of the I gain is zero before control of the heating unit is switched.

5. A method for controlling a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit,
the method comprising a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.

6. A program for causing a processor of a device, which is a flavor inhaler or an aerosol-generating device, comprising: a power source unit; a heating unit for heating a flavor source or an aerosol source; and a control unit for controlling electrical supply from the power source unit to the heating unit by means of PID control based on control information for controlling the temperature of the heating unit, to implement
a step in which the control unit controls the heating unit while switching PID gains used in the PID control, in accordance with an elapsed time from the start of control based on the control information or with a transition of the temperature at which the aerosol source is heated, and determines, based on a predefined condition, that an accumulated value of the integral term of the PID gains is not to be reset at a specific switching timing of control with respect to the heating unit.
